# EUROPÄISCHE PATENTANMELDUNG

(11) **EP 1 661 788 A2**
(43) Veröffentlichungstag der Anmeldung: **31.05.2006**
(21) Anmeldenummer: 05450180.4
(22) Anmeldetag: 07.11.2005
(51) Int. Cl.: B62D 1/10, C23C 18/22, C23C 18/16, C25D 7/00

(54) **Verfahren zum Leiterauftrag**

(30) Priorität: 08.11.2004 DE 102004053798
(71) Anmelder: I & T Innovation Technology Entwicklungs- und Holding Aktiengesellschaft, 7011 Siegendorf (AT)
(72) Erfinder: John, Wolfgang, Dr., 7202 Bad Sauerbrunn (AT); Klier, Jürgen, 64625 Bensheim-Auerbach (DE); Eberhardt, Frank, 75417 Mühlacker-Mühlhausen (DE)

(57) **Zusammenfassung**

Zum Aufbringen einer leitenden Beschichtung 6; 30 durch ein MID-Verfahren im seitlichen Bereich eines länglichen Einschnitts oder Spalts 2 eines Körpers 1; 22, wobei sich die Beschichtung 6; 30 im wesentlichen linienförmig in Längsrichtung des Einschnitts oder Spalts 2 erstreckt, wird ein Verfahren vorgeschlagen, bei dem die Oberfläche des seitlichen Bereichs in Längsrichtung des Einschnitts oder Spalts 2 profiliert wird unter Ausbildung eines in Richtung der Öffnung des Einschnitts oder Spalts 2 weisenden Oberflächenstreifens 5; 38.

## Beschreibung

Die Erfindung betrifft ein Verfahren zum Auftragen einer leitenden Beschichtung auf die Seitenwand eines Einschnitts, Zwischenraums oder Spalts in einem Körper oder an einem lamellaren Formteil und hierbei insbesondere ein Verfahren zur Anordnung von Leiterbahnen auf einem schraubenförmigen Wendelkörper in einem Fahrzeuglenkrad mit einer drehfest an eine Lenksäule gekoppelten Nabe sowie ein derartiges Fahrzeuglenkrad.

Fahrzeuglenkräder mit einem feststehenden Mittelteil haben grundsätzlich den Vorteil, dass am Mittelteil angeordnete Bedienelemente unabhängig von der Lenkradstellung immer an der gleichen Stelle zu finden sind. Auf dem feststehenden Mittelteil kann ein Airbagmodul mit einem Airbag vorgesehen werden, der nicht mehr notwendigerweise symmetrisch zum Drehzentrum der Lenkachse gestaltet sein muss. Da die Orientierung des sich aus dem feststehenden Airbagmodul entfaltenden Airbags von vornherein feststeht, können asymmetrische Airbagformen mit optimierten Rückhalteeigenschaften eingesetzt werden.

Ein Fahrzeuglenkrad der eingangs genannten Art mit einem torsionssteifen schraubenförmigen Wendelkörper zum fahrzeugfesten Halten eines Lenkradmittelteils ist aus der EP 0 314 887 Al bekannt. Bei der Anbringung eines Airbagmoduls auf dem feststehenden Mittelteil ist die Verkabelung des Airbagmoduls allgemein problematisch im Vergleich zu herkömmlichen Lenkrädern, bei denen sich das Airbagmodul mit dem Lenkrad mitdreht.

Die bisherigen Versuche zur Bereitstellung einer zuverlässigen Verkabelung sind sehr aufwendig und benötigen einen verhältnismäßig großen Bauraum. Aus diesem Grund wurde die direkte Anordnung der Leiter auf dem Wendelkörper vorgeschlagen. Allerdings ist das Aufkleben, Auftragen oder Auflaminieren metallischer Folien oder Pasten in den Zwischenräumen des Wendelkörpers nicht ohne weiteres prozesssicher durchführbar.

Vor diesem Hintergrund eröffnet die vorliegende Erfindung die Möglichkeit, einen schraubenförmigen Wendelkörper für ein Fahrzeuglenkrad in einem Verfahren mit einer leitenden oder insbesondere metallischen Beschichtung in der Art von Leiterbahnen zu versehen.

Gemäß der Erfindung ist hierzu bei einem Lenkrad der eingangs genannten Art vorgesehen, dass der festgehaltene Mittelteil ein Airbagmodul umfasst und auf der Spirale elektrische Leitungen aufgebracht sind, wobei der schraubenförmige Wendelkörper ein in der sog. Molded Interconnect Device Technik, nachfolgend kurz: MID-Technik, hergestelltes Kunststoffteil mit metallisierten Leiterbahnen ist, dessen Windungen ein Oberflächenprofil aufweisen, das den Verlauf der Leiterbahnen vorgibt. Die Erfindung macht sich den Wendelkörper selbst als Träger für die erforderlichen elektrischen Leitungen zunutze, so dass auf separate Kabelstränge mit komplizierten Führungen verzichtet werden kann. Der Wendelkörper kann alleine eine mechanische Verbindung zwischen einem fahrzeugfesten Befestigungspunkt (z.B. Lenkstock) und dem feststehenden Mittelteil des Lenkrads darstellen, die auf eine elektrische Verbindung erweitert ist. Die Ausbildung des Wendelkörpers als MID-Bauteil erlaubt es, unter bestmöglicher Bauraum- und Gewichtseinsparung die mechanische Halterung und die elektrische Verkabelung des Airbagmoduls in einem Bauteil zu vereinen.

Im allgemeinen schafft die Erfindung zudem auch ein Verfahren zur Anordnung einer leitenden und/oder metallischen Beschichtung im seitlichen Bereich eines länglichen Einschnitts oder Spalts in einem Körper oder in einem Zwischenraum eines lamellenartigen Gegenstands.

Die Erfindung schafft insbesondere ein Verfahren zur Herstellung eines schraubenförmigen Wendelkörpers mit einer Leiterbelegung für ein erfindungsgemäßes Fahrzeuglenkrad.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Fig. 1: eine veranschaulichende Darstellung zur Herstellung einer Leiterbahn in einem Einschnitt eines Körpers gemäß der vorliegenden Erfindung;
- Fig. 2: einen Schnitt durch ein erfindungsgemäßes Lenkrad;
- Fig. 3: eine perspektivische Ansicht eines Wendelkörpers gemäß einer ersten Ausführungsform der Erfindung;
- Fig. 4: eine vergrößerte Detailansicht des Wendelkörpers aus Fig. 2;
- Fig. 5: eine weitere vergrößerte Detailansicht des Wendelkörpers aus Fig. 2;
- Fig. 6: noch eine weitere vergrößerte Detailansicht des Wendelkörpers aus Fig. 2; und

- Fig. 7: eine schematische Querschnittsansicht zweier benachbarter Windungen des Wendelkörpers aus Fig. 2.

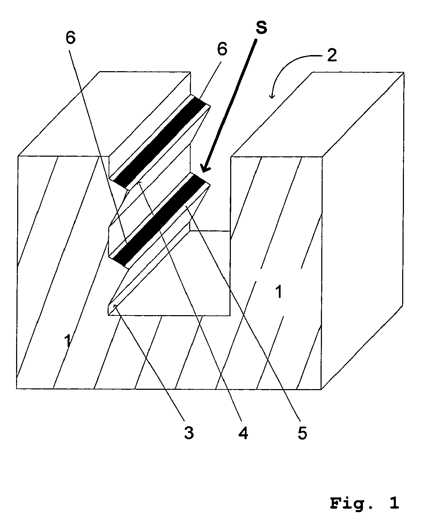

Gemäß Fig. 1 weist ein Körper 1 einen an der Oberfläche austretenden Einschnitt 2 oder Spalt auf. Eine annähernd senkrecht zu der Oberfläche verlaufende Seitenwand 3 des Einschnitts 2 ist in der Längsrichtung entlang der Ausdehnung des Einschnitts profiliert ausgeführt. Das Oberflächenprofil weist im Schnitt zwei sägezahnförmige Spitzen 4 auf. Dessen zwei zur Öffnung des Einschnitts 2 weisenden Oberflächenstreifen 5 sind dazu vorgesehen, eine Leiterbahn 6 zu tragen. Diese Leiterbahnen 6 sind in der Art einer metallische Belegung des Körpers 1 in einem sog. Laser-Direkt-Strukturierungsverfahren mit anschließender Metallisierung erzeugt. Der gewünschte selektive Auftrag auf den Oberflächenstreifen 5 ergibt sich durch eine selektive Aktivierung der Oberfläche mittels einer örtlichen Lichtbestrahlung entlang des gewünschten Verlaufs der Leiterbahn. Auf den aktivierten Oberflächenabschnitten lässt sich nachfolgend in bekannter Weise eine selektive Metallisierung in einem stromlosen Verfahren anlegen. Wie schematisch angedeutet ist, wird die Lichtbestrahlung dabei vorzugsweise mit einem Laserstrahl S bewirkt, der von der Seite der Austrittsstelle des Einschnitts 2 her einstrahlt. Um eine saubere Fokussierung des Laserstrahls S auf den gewünschten zu aktivierenden Oberflächenbereich auf dem Oberflächenstreifen 5 zu ermöglichen, ist die Profilierung der Seitenwand derart ausgeführt, dass die Bestrahlung der Oberflächenstreifen 5 von einem Punkt vor der Austrittstelle des Einschnitts aus 2 zugänglich ist und zu dieser Richtung ungefähr senkrecht oder nur mit geringer Neigung verläuft.

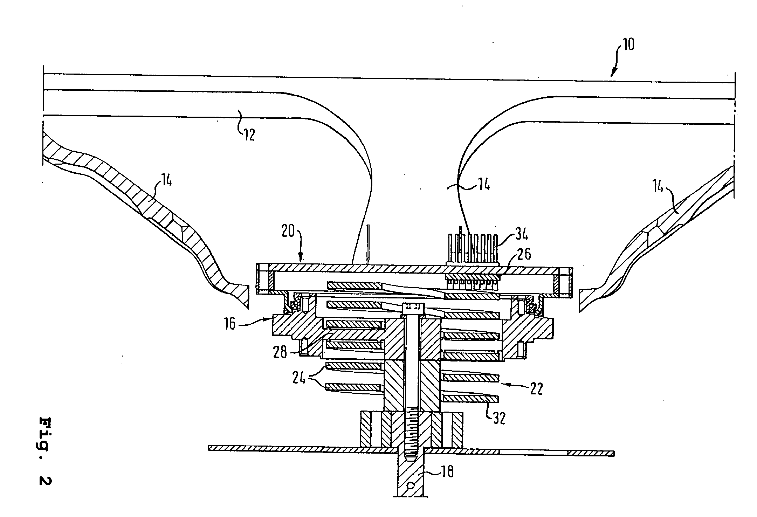

Eine besondere Anwendung des erfindungsgemäßen Verfahrens zum Auftragen einer leitenden Beschichtung in einem Verfahren verdeutlicht Fig. 2. Hierin ist ein Lenkrad 10 mit einem Lenkradkranz 12, Speichen 14, und einer Nabe 16 dargestellt. Die Nabe 16 ist ferner drehfest mit einer Lenksäule 18 verbunden. Das Lenkrad 10 weist ferner einen relativ zur Nabe 16 drehbaren Mittelteil 20 auf, auf dem ein Airbagmodul (nicht gezeigt) angebracht ist. Eine torsionssteifer, schraubenförmiger Wendelkörper 22 ist koaxial zur Lenksäule 18 angeordnet. Der in axialer Richtung elastische Wendelkörper 22 weist mehrere Windungen 24 mit vorzugsweise gleichem Durchmesser auf, die einen allgemein rechteckförmigen Querschnitt haben. Ein oberes Ende 26 des Wendelkörpers 22 ist fest mit dem Mittelteil 20 verbunden, während das untere Ende 32 fahrzeugfest gehalten ist, z.B. durch mechanische Anbindung an einen Lenkstock (nicht gezeigt). Der Boden 28 der Nabe 16 weist eine axiale Durchtrittsöffnung für einen Windungsbereich des Wendelkörpers 22 auf. Der Boden 28 der Nabe 16 greift zwischen zwei Windungen 24 ein.

Bei einer Drehung des Lenkrads 10 hält der torsionssteife Wendelkörper 22 den Mittelteil 20 mit dem Airbagmodul in seiner Ausgangslage fest. Je nach Drehrichtung wird dabei der Abschnitt zwischen dem Nabenboden 28 und dem Mittelteil 20 oder der Abschnitt zwischen dem Nabenboden 28 und dem Lenkstock axial gestaucht.

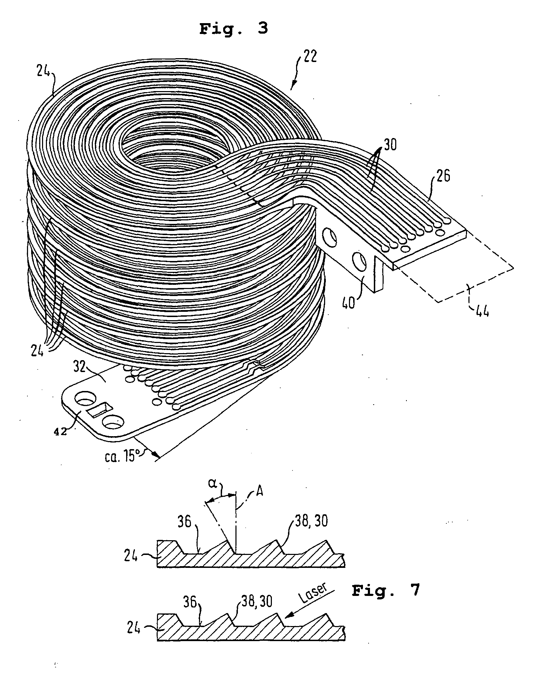

Der Wendelkörper 22 sorgt neben der fahrzeugfesten Halterung des Lenkradmittelteils 20 auch für die elektrische Anbindung des Airbagmoduls. In Fig. 3 ist eine erste Ausführungsform des Wendelkörpers 22 mit mehreren Leiterbahnen 6 gezeigt, die auf den Windungen 24 parallel von einem bis zum anderen Ende des Wendelkörpers 22 verlaufen. Am oberen Ende 26 des Wendelkörpers 22 sind die Leiterbahnen 6 mit Anschlussstiften 34 verbunden (siehe Fig. 2), auf die ein entsprechender Steckverbinder des Airbagmoduls aufgesteckt wird.

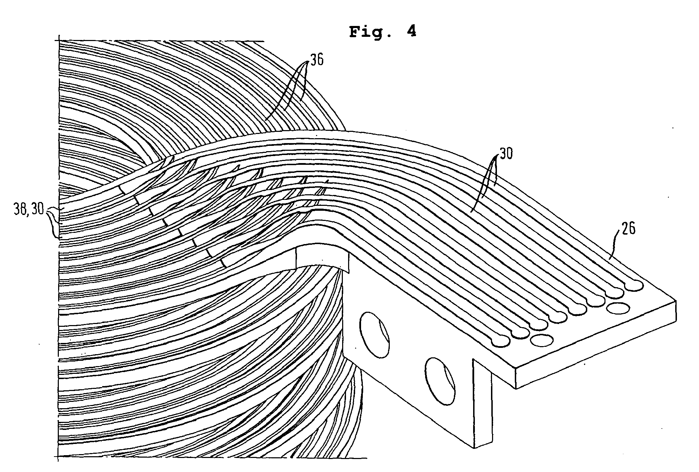

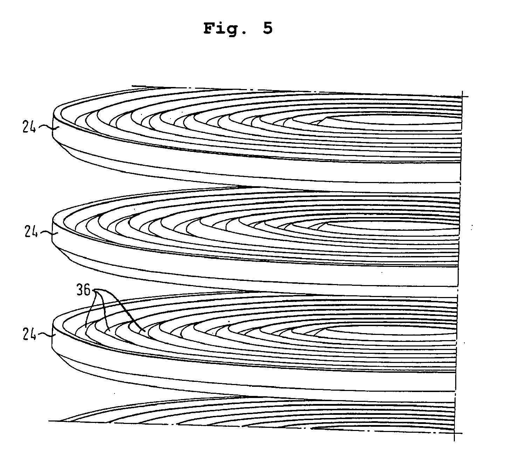

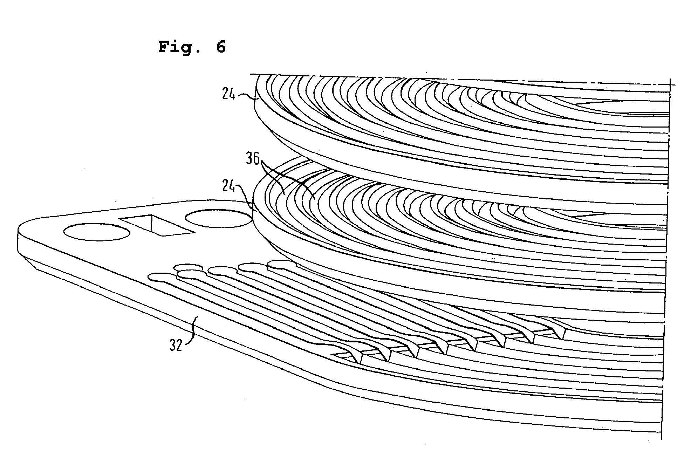

Aus Fig. 4 bis Fig. 6 geht hervor, dass die Windungen 24 des Wendelkörpers 22 einen allgemein rechteckförmigen Querschnitt mit einem sägezahnartigen Profil haben, so das mehrere nebeneinander liegende und parallel zueinander verlaufende Nuten 36 gebildet sind. Die Nuten 36 haben Oberflächenstreifen 38, die schräg zur Axialrichtung A des Wendelkörpers 22 gerichtet sind. Die Vorteile der Ausbildung der Leiterbahnen 30 auf diesen geneigten Oberflächenstreifen 38 ergibt sich aus der nachfolgende Beschreibung des erfindungsgemäßen MID-Herstellverfahrens der in den Figuren 2 bis 6 gezeigten Wendelkörpers 22.

Zunächst wird der Träger des Wendelkörpers 22 mit den Nuten 36 durch Spritzgießen hergestellt. Als Material eignet sich hierfür z.B. ein Kunststoff, der einen lasersensitiven Metallkomplex enthält, welcher zunächst nicht elektrisch leitfähig ist. Die gezielte Bestrahlung der Oberflächenstreifen 38 mit einem geeigneten Laser führt zu einer Spaltung des Metallkomplexes in elementares Metall und organische Gruppen.

Die durch die Bestrahlung aufgeraute Oberfläche der Oberflächenstreifen 38 mit den eingebetteten Metallpartikeln dient im nachfolgenden Metallisierungsprozess als Grundlage für die Verankerung einer Metallschicht, welche die Leiterbahnen 6 bildet.

Fig. 7 zeigt, dass die Laserbestrahlung der schrägen Oberflächenstreifen 38 der Nuten 36 besonders effizient ist. Aufgrund des geringen Windungsabstands des Wendelkörpers 22 kann die Leiterbahnstrukturierung nämlich nur mittels eines flach einfallenden Laserstrahls vorgenommen werden. Bei einer ebenen Oberfläche der Windungen 24 wäre aufgrund des vergrößerten Auftreffbereichs des Laserstrahls kein enger radialer Abstand der Leiterbahnen 6 möglich. Der Winkel α der Oberflächenstreifen 38 zur Axialrichtung A des Wendelkörpers 22 wird daher in Abhängigkeit vom Einfallswinkel des Laserstrahls am besten so gewählt, dass der Laserstrahl möglichst senkrecht auf die Oberflächenstreifen 38 auftrifft.

Wie in Fig. 3 gezeigt, können die an den Enden 26, 32 des Wendelkörpers 22 vorgesehenen Befestigungslaschen 40, 42 in den gestrichelten Bereich 44 verlagert bzw. geneigt ausgebildet werden, um eine optimale Erreichbarkeit der Oberflächenstreifen 38 der Nuten 36 durch den Laser zu gewährleisten.

### Bezugszeichen:

- Körper: 1
- Einschnitt: 2
- Seitenwand: 3
- Spitzen des Oberflächenprofils: 4
- Oberflächenstreifen: 5
- Leiterbahnen: 6
- Lenkrad: 10
- Lenkradkranz: 12
- Speichen: 14
- Nabe: 16
- Boden: 28
- Mittelteil: 20
- Lenksäule: 18
- Wendel körper: 22
- Windungen: 24
- Oberes Ende: 26
- Leiterbahnen: 30
- Unteres Ende: 32
- Anschlussstifte: 34
- Nuten: 36
- Oberflächenstreifen: 38
- Befestigungslaschen: 40, 42

## Patentansprüche

1. Verfahren zum Aufbringen einer leitenden Beschichtung (6; 30) im seitlichen Bereich eines länglichen Einschnitts oder Spalts (2) eines Körpers (1; 22), wobei sich die Beschichtung im wesentlichen linienförmig in Längsrichtung des Einschnitts oder Spalts (2) erstreckt, **dadurch gekennzeichnet, dass** die Oberfläche (3) des seitlichen Bereichs in Längsrichtung des Einschnitts profiliert wird unter Ausbildung eines in Richtung der Öffnung des Einschnitts oder Spalts weisenden Oberflächenstreifens (5; 38).

2. Verfahren nach Anspruch 1, worin die leitende Beschichtung (6; 30) ein metallischer Überzug ist, der insbesondere in einem galvanischen oder chemischen Verfahren aufgetragen wird.

3. Verfahren nach Anspruch 1 oder 2, worin der Oberflächenstreifen (5; 38) vor dem Beschichtungsauftrag mit einem Lichtstrahl (S) oder insbesondere einem Laserstrahl bestrahlt wird.

4. Verfahren nach einem der vorangehenden Ansprüche, worin die leitende Beschichtung eine Leiterbahn (6; 30) ist.

5. Verfahren nach einem der vorangehenden Ansprüche, worin der Körper (1; 22) ein Kunststoffspritzgießteil ist.

6. Verfahren nach einem der vorangehenden Ansprüche, wobei der Spalt (2) in dem Körper (1; 22) eine prismatische Nut ist.

7. Verfahren nach einem der Ansprüche 1 bis 6, wobei der Spalt (2) ein Zwischenraum in einem lamellenartigen Abschnitt des Körpers (22) ist.

8. Verfahren nach Anspruch 7, wobei der Zwischenraum zwischen den Windungen (24) eines schraubenförmigen Wendelkörpers (22) liegt.

9. Verfahren nach Anspruch 8, wobei der Wendelkörper (22) Windungen (24) eines flachen Teilstücks umfasst.

10. Verfahren nach Anspruch 9, wobei die Flachseiten des flachen Teilstücks sich in wesentlichen in der radialen Richtung des Wendelkörpers (22) erstrecken.

11. Verfahren nach Anspruch 8 zur Herstellung eines Wendelkörpers (22), weiterhin aufweisend die Schritte zum:
a. Spritzgießen eines Grundkörpers (22) mit mehreren schraubenartigen Windungen (24), die ein im wesentlichen in Windungsrichtung verlaufendes Oberflächenprofil mit gezahntem Querschnitt aufweisen, aus einem MIDgeeigneten Material;
b. Laserbestrahlen von Oberflächenstreifen (38) in dem profilierten Bereich der Windungen (24) im wesentlichen in radialer Richtung von der Außenseite des schraubenartig gewundenen Grundkörpers (22); und
c. Metallisieren der bestrahlten Oberflächenstreifen (38) zur Bildung von Leiterbahnen (6).
